**Europäisches Patentamt**

**European Patent Office**

**Office européen des brevets**

(19)

(11) Veröffentlichungsnummer : **0 084 612**

**B1**

(12)

# EUROPÄISCHE PATENTSCHRIFT

(45) Veröffentlichungstag der Patentschrift : **12.11.86**

(51) Int. Cl.⁴ : **B 23 B 27/14**

(21) Anmeldenummer : **82110248.0**

(22) Anmeldetag : **06.11.82**

(54) **Vieleckiger Schneideinsatz.**

(30) Priorität : **08.12.81 DE 3148535**

(43) Veröffentlichungstag der Anmeldung :
**03.08.83 Patentblatt 83/31**

(45) Bekanntmachung des Hinweises auf die Patenterteilung : **12.11.86 Patentblatt 86/46**

(84) Benannte Vertragsstaaten :
**CH FR GB IT LI**

(56) Entgegenhaltungen :
**DE-A- 2 231 631**
**DE-A- 2 940 328**
**DE-B- 2 309 443**
**US-A- 4 214 845**
**US-A- 4 304 509**

(73) Patentinhaber : **Fried. Krupp Gesellschaft mit beschränkter Haftung**
**Altendorfer Strasse 103**
**D-4300 Essen 1 (DE)**

(72) Erfinder : **Reiter, Norbert, Dr.**
**Hunsrückstrasse 29**
**D-4020 Mettmann (DE)**

EP 0 084 612 B1

## Beschreibung

Die Erfindung betrifft einen vieleckigen Schneideinsatz für Werkzeuge der spanabhebenden Bearbeitung, der an seinen Deckflächen mit einer Vielzahl von erhabenen Spanformelementen versehen ist, die sich in ihrem Querschnitt nach oben reduzieren und die im Abstand zu den Schneidkanten in Reihe angeordnet sind.

Bei bekannten Schneideinsätzen dieser Art sind längs der Schneidkante Brechernuten angeordnet (vgl. z. B. DE-A-2 231 631). Bei anderen Schneideinsätzen ist die Deckfläche der Schneideinsätze innerhalb der Schneidkanten muldenförmig ausgebildet (vgl. z. B. DE-B-2 309 443 oder US-A-4 214 845). In den Spanbrechernuten bzw. in der muldenförmigen Vertiefung ist eine Vielzahl von Spanbrechervorsprüngen bzw. -elementen angeordnet, die als Kugelsegment (DE-E-2 309 443) oder als Kegelstumpf (US-A-4 214 845) ausgebildet sind und jeweils einen Abstand zueinander aufweisen. Aus der US-A-4 214 845 sind außerdem in der Mitte der Schneidkanten angeordnete einzelne längliche Spanformelemente bekannt, deren Grundfläche eine in Richtung auf die Schneidkante weisende stumpfwinklige Verdickung aufweist.

In der Praxis hat sich jedoch herausgestellt, daß die vorbeschriebenen Schneideinsätze nur in einem begrenzten Bereich unterschiedlicher Schnittbedingungen, wie etwa unterschiedlicher Schnittiefen, Vorschubgeschwindigkeiten sowie Werkstoffe, verwendbar sind. Im Zuge der technischen Weiterentwicklung und insbesondere infolge der zunehmenden Automatisierung werden jedoch möglichst universell einsetzbare Schneideinsätze gefordert, mit denen eine sichere Formung und Entfernung des Spanes aus der Maschine Grundvoraussetzung für den kontinuierlichen Betrieb ist.

Es ist daher Aufgabe der vorliegenden Erfindung, einen Schneideinsatz zu schaffen, der gleichermaßen eine sichere Formung und Entfernung des Schneidspans in einem großen Anwendungsbereich unterschiedlicher Schnittbedingungen ermöglicht und der eine Brechung von Spänen nicht nur unterschiedlicher Stärke, sondern auch verschiedener Werkstoffe gewährleistet.

Die Aufgabe wird durch einen vieleckigen Schneideinsatz, der vorzugsweise drei- oder viereckige Deckflächen sowie darin eingebettete Spanformelemente besitzt, gelöst, dessen Spanformelemente mit einer Grundfläche ausgebildet sind, deren Umfangslinie sich in drei Hauptrichtungen erstreckt. Dabei ist bei den innerhalb einer Reihe angeordneten Spanformelementen die eine der drei Hauptrichtungen auf die benachbarte Schneidkante ausgerichtet.

Vorzugsweise werden die Spanformelemente so angeordnet, daß die auf die benachbarte Schneidkante ausgerichtete Hauptrichtung der Umfangslinie der Spanformelemente parallel zu der Schneidkante verläuft.

Die Spanformelemente sind vorzugsweise, entsprechend Anspruch 4, mit dreieckiger Grundfläche ausgebildet.

Man ist aber keineswegs auf eine strenge Dreiecksform beschränkt, sondern verwendet nach einer weiteren Ausgestaltung der Erfindung pyramidenstumpfartige Spanformelemente mit abgerundeten, kontav ausgebildeten Seitenflächen, wobei die Umfangslinien der Spanformelemente beim Übergang von einer Hauptrichtung zu einer anderen gerundet sein können, so daß die Spanformelemente z. B. dreizackig mit konkav gestalteten Seitenflächen oder sternförmig mit abgerundeten Strahlenenden ausgebildet sind. Die beschriebene Ausgestaltung gestattet eine jeweils optimale Anpassung der Spanformelemente an die Außenkontur des Schneideinsatzes, so daß die gewünschte Spanformung bis zu kleinsten Schnittiefen gewährleistet ist.

Es erweist sich weiterhin als vorteilhaft, die Spanformelemente in Spanformrillen einzubetten, die konkav oder stufenförmig ausgebildet sind.

Insbesondere bei zweitseitig verwendbaren Schneideinsätzen empfiehlt sich zudem zumindest ein teilweiser Planschliff der Spanformelemente, insbesondere derart, daß die parallel zu der Deckfläche des Schneideinsatzes liegende Planfläche des Spanformelementes und die Deckfläche gleich hoch sind.

Nach einer weiteren Ausgestaltung der Erfindung werden in dem Schneideinsatz Spanformelemente unterschiedlicher Größe und unterschiedlicher Geometrie d. h. spitzwinklige und abgerundete Pyramidenstumpfformen, verwendet.

Ausführungsbeispiele der Erfindung sind in den Zeichnungen dargestellt.

Es zeigen :

Figur 1 einen Schneideinsatz in Draufsicht,

Figur 2a bis d Querschnittsansichten längs der Linie II-II mit jeweils unterschiedlich geformten Spanformelementen in verschieden geformten Spanformrillen bzw. auf ebenen Deckflächen des Schneideinsatzes,

Figur 3 einen viereckigen Schneideinsatz in Draufsicht,

Figur 4a bis c jeweils einen Querschnitt längs der Linie IV-IV mit verschieden geformten Schneidformelementen bei unterschiedlichen Deckoberflächen des Schneideinsatzes,

Figur 5 ein Spanformelement mit in drei Richtungen angeordneten nahezu kugelförmigen Enden in der Draufsicht,

Figur 6 einen Schneideinsatz in der Draufsicht und

Figur 7 in einem Querschnitt längs der Linie VII-VII entsprechend Fig. 6.

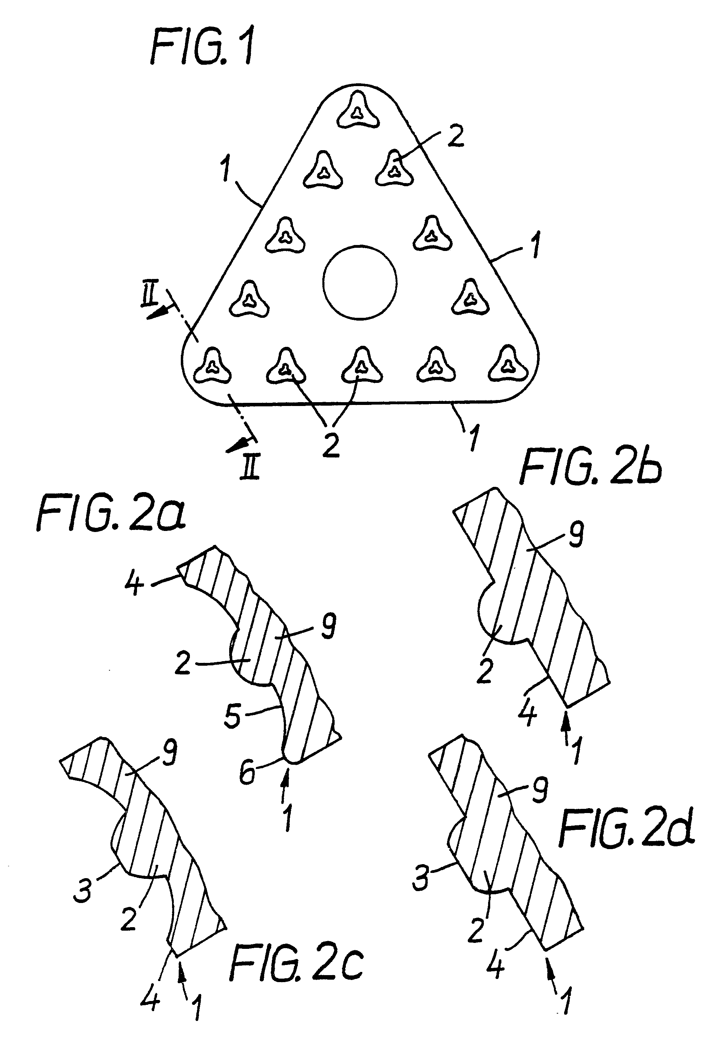

Der in Fig. 1 dargestellte Schneideinsatz besitzt eine im wesentlichen regelmäßige Dreiecksform und weist längs der Schneidkanten 1, die aus den Schnittlinien der dargestellten Deckfläche mit jeweils rechtwinklig anliegenden Seitenflächen gebildet werden, Spanformelemente 2 auf, die im dargestellten Ausführungsbeispiel im wesentlichen sternförmig gestaltet sind.

Die Möglichkeit der Formgestaltung der Spanformelemente 2 sind weiterhin aus den Fig. 2a bis 2d ersichtlich, wonach die Spanformelemente im Querschnitt kreissegmentartiges bzw. halbkreisförmiges Aussehen, ggf. mit plangeschliffener Oberfläche 3 besitzen. Die Spanformelemente können entsprechend den Darstellungen in Fig. 2b und 2d auf der eben gestalteten Deckfläche 4 oder in muldenförmigen Spanformrillen 5 angeordnet sein. Die Spanformrillen können verschieden gestaltet sein : Es sind ebenso asymmetrische Anordnungen (Fig. 2a) wie auch symmetrische (Fig. 2c) möglich. Desweiteren kann die Tiefe sowie der Radius der Spanformrille den Schneidbedürfnissen angepaßt werden.

Es hat sich auch als vorteilhaft erwiesen, die Schneidkanten 1 relativ zur Deckfläche 4 des Schneideinsatzes überhöht anzulegen, so daß zur Mitte des Schneideinsatzes die Deckfläche geringfügig geneigt verläuft bzw. sich ein nasenförmiger Eckvorsprung 6 ergibt (Fig. 2a).

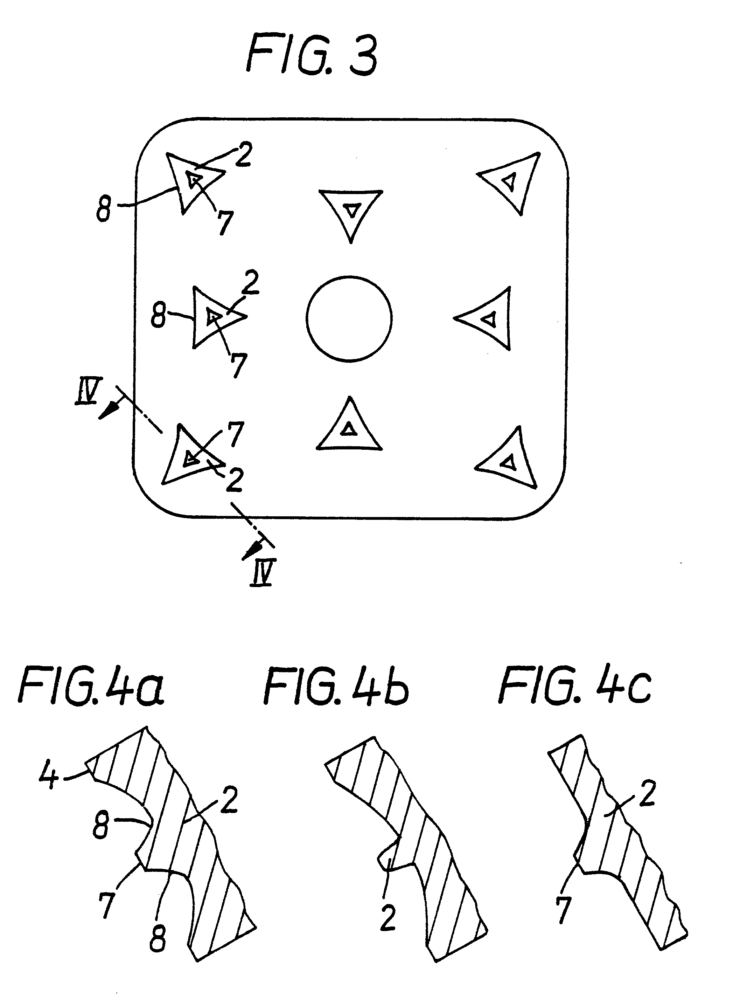

Der in Fig. 3 dargestellte viereckige Schneideinsatz besitzt dreizackige Spanformelemente 2, die ggf. entsprechend Fig. 4a plangeschliffene Flächen 7 besitzen. Die Seitenflächen 8 der Spanformelemente sind konkav gewölbt.

Sofern die Spanformelemente 2 in eine muldenförmige Spanformrille 5 eingebettet sind, empfiehlt es sich, insbesondere bei zweiseitig verwendbaren Schneideinsätzen die Höhe der Spanformelemente 2 so zu begrenzen, daß deren Spitze bzw. parallel zur Deckfläche 4 angeordnete Fläche 7 höchstens gleich hoch liegen.

Bei der Anordnung der Spanformelemente 2 ist man nicht zwangsläufig darauf festgelegt, diese parallel zur Schneidkante anzuordnen, bisweilen erweist es sich als ebenso vorteilhaft, die Spanformelemente auf einer Bogenlinie mit großem Radius längs der Schneidkante anzuordnen.

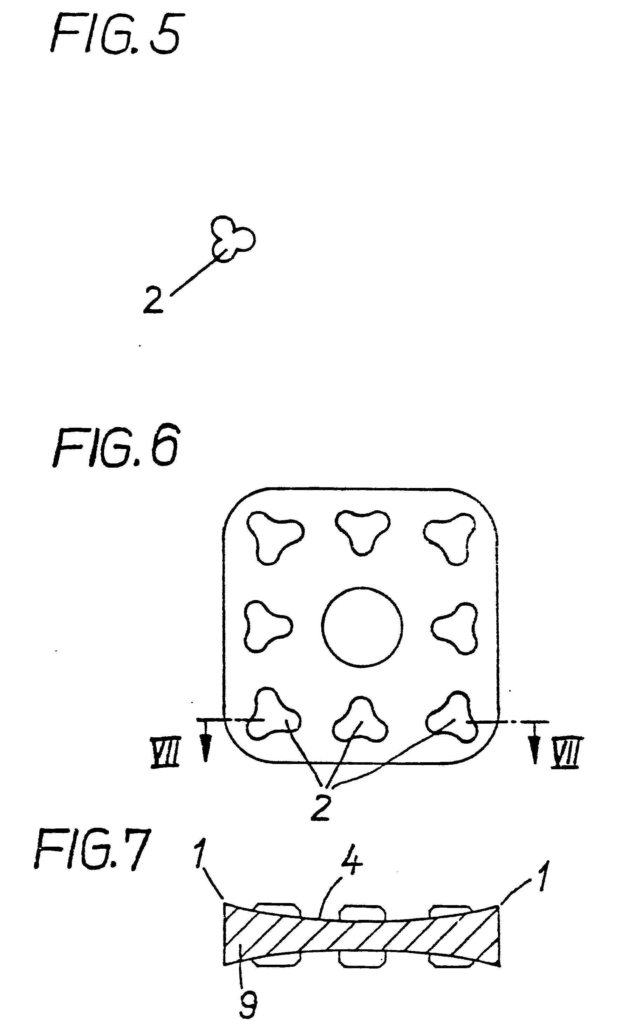

Die Schneideinsätze können unterschiedliche Spanformelemente 2 besitzen. Die verwendeten Formen reichen vom dreizackigen über den sternförmigen Kegelstumpf bis zu dem — vgl. Fig. 5 — Spanformelement 2 mit kleeblattartiger Grundfläche mit nahezu kugelförmig ausgebildeten Enden.

Fig. 6 zeigt einen zweiseitig verwendbaren Schneideinsatz mit jeweils drei längs der Schneidkante angeordneten sternförmigen Spanformelementen 2. Die Deckfläche 4 des Schneideinsatzes ist, wie in Fig. 7 dargestellt, muldenförmig auf Ober- wie Unterseite ausgestaltet, so daß der Schneideinsatzgrundkörper 9 die Form einer Konkavlinse erhält.

Die Spanformelemente können auf dem Grundkörper 9 des Schneideinsatzes durch Sintern, Löten, Kleben oder ähnliches aufgebracht werden.

**Patentansprüche**

1. Vieleckiger Schneideinsatz für Schneidwerkzeuge der spanabhebenden Bearbeitung, der an seinen Deckflächen (4) mit einer Vielzahl von erhabenen Spanformelementen (2) versehen ist, die sich in ihrem Querschnitt nach oben reduzieren und die im Abstand zu den Schneidkanten (1) in Reihe angeordnet sind, dadurch gekennzeichnet, daß die Spanformelemente (2) sich in drei Hauptrichtungen erstreckende Umfangslinien aufweisen, wobei bei den innerhalb einer Reihe jeweils zu den Schneidkanten (1) angeordneten Spanformelementen (2) eine der drei Hauptrichtungen auf die benachbarte Schneidkante (1) ausgerichtet ist.

2. Schneideinsatz nach Anspruch 1, dadurch gekennzeichnet, daß die auf die benachbarte Schneidkante (1) ausgerichtete Hauptrichtung der Umfangslinien der Spanformelemente (2) parallel zur Schneidkante angeordnet ist.

3. Schneideinsatz nach Anspruch 1, dadurch gekennzeichnet, daß die auf die benachbarte Schneidkante (1) ausgerichtete Hauptrichtung der Umfangslinien der Spanformelemente (2) auf einer Bogenlinie angeordnet ist.

4. Schneideinsatz nach Anspruch 1, dadurch gekennzeichnet, daß die Umfangslinie mindestens eines Spanformelements durch die Seiten eines Dreiecks gebildet ist.

5. Schneideinsatz nach Anspruch 1, dadurch gekennzeichnet, daß die Umfangslinie mindestens eines Spanformelements (2) durch drei gerundete konkave Linien gebildet ist.

6. Schneideinsatz nach Anspruch 1, dadurch gekennzeichnet, daß die Umfangslinien der Spanformelemente (2) beim Übergang von einer Hauptrichtung in eine andere gerundet sind.

7. Schneideinsatz nach Anspruch 1, dadurch gekennzeichnet, daß die Spanformelemente (2) an ihrem oberen Ende eine ebene Fläche (3, 7) aufweisen.

8. Schneideinsatz nach Anspruch 7, dadurch gekennzeichnet, daß die ebenen Flächen (3, 7) aller Spanformelemente (2) einer Deckfläche (4) in einer gemeinsamen Ebene liegen.

9. Schneideinsatz nach Anspruch 8, dadurch gekennzeichnet, daß die Deckfläche (4) muldenförmig ausgebildet ist und die durch die oberen Flächen (3, 7) der Spanformelemente (2) gegebene Ebene nicht höher ist als die durch die Schneidkanten (1) gegebene Ebene.

10. Schneideinsatz nach Anspruch 1, dadurch gekennzeichnet, daß die Spanformelemente (2) an ihrem oberen Ende gerundet sind.

11. Schneideinsatz nach Ansprüchen 1 bis 8, dadurch gekennzeichnet, daß die Spanformelemente (2) in am Rand der Deckfläche (4) angeordneten, Spanformrillen (5) untergebracht sind.

12. Schneideinsatz nach Anspruch 11, dadurch gekennzeichnet, daß die Spanformrillen (5) konkav oder stufenförmig ausgebildet sind.

**Claims**

1. Polygonal cutting insert for cutting tools for machining which is provided on its cover surfaces (4) with a plurality of raised chip-control elements (2) which reduce upwards in cross-section and are arranged in rows with spacing from the cutting edges (1), characterised in that the chip-control elements (2) possess circumferential lines extending in three main directions, while in the chip-control elements (2) arranged within a row in each case towards the cutting edges (1) one of the three main directions is oriented to the adjacent cutting edge (1).

2. Cutting insert according to Claim 1, characterised in that the main direction of the circumferential lines of the chip-control elements (2) oriented to the adjacent cutting edge (1) is arranged parallel to the cutting edge.

3. Cutting insert according to Claim 1, characterised in that the main direction of the cirumferential lines of the chip-control elements (2) oriented to the adjucent cutting edge (1) is arranged on an arcuate line.

4. Cutting insert according to Claim 1, characterised in that the circumferential line of at least one chip-control element is formed by the sides of a triangle.

5. Cutting insert according to Claim 1, characterised in that the circumferential line of at least one chip-control element (2) is formed by three rounded concave lines.

6. Cutting insert according to Claim 1, characterised in that the circumferential lines of the chip-control elements (2) are rounded at the transition from one main direction into another.

7. Cutting insert according to Claim 1, characterised in that the chip-control elements (2) have a plane surface (3, 7) at their upper end.

8. Cutting insert according to Claim 7, characterised in that the plane surfaces (3, 7) of all chip-control elements (2) of a cover surface (4) lie in one common plane.

9. Cutting insert according to Claim 8, characterised in that the cover surface (4) is made in trough form and the plane provided by the upper surfaces (3, 7) of the chip-control elements (2) is not higher than the plane provided by the cutting edges (1).

10. Cutting insert according to Claim 1, characterised in that the chip-control elements (2) are rounded at their upper ends.

11. Cutting insert according to Claim 1 to 8, characterised in that the chip-control elements (2) are accommodated in chip-control grooves (5) arranged on the edge of the cover surface (4).

12. Cutting insert according to Claim 11, characterised in that the chip-control grooves (5) are made concave or in step form.

**Revendications**

1. Plaquette de coupe polygonale pour outils d'usinage avec enlèvement de copeaux, qui comporte, sur ces surfaces de contact (4), une pluralité d'éléments saillants (2), formateurs de copeaux, dont la section diminue vers le haut et qui sont disposés en rangées à une certaine distance des bords de coupe (1), caractérisée en ce que les éléments (2) de formation des copeaux ont un contour délimité par des lignes orientées dans trois directions principales, et en ce que, dans les éléments (2) de formation des copeaux formant l'une des rangées associées aux bords de coupe (1), l'une de trois directions principales est déterminée d'après celle du bord de coupe voisin (1).

2. Plaquette de coupe selon la revendication 1, caractérisée en ce que la direction principale de la ligne délimitant le contour des éléments (2) de formation des copeaux qui est déterminée d'après le bord de coupe voisin (1) est parallèle au bord de coupe.

3. Plaquette de coupe selon la revendication 1, caractérisée en ce que la direction principale de la ligne délimitant le contour des éléments (2) de formation des copeaux qui est déterminée d'après le bord de coupe voisin (1) suit une ligne courbe.

4. Plaquette de coupe selon la revendication 1, caractérisée en ce que la ligne délimitant le contour de l'un au moins des éléments de formation des copeaux est formée par les côtés d'un triangle.

5. Plaquette de coupe selon la revendication 1, caractérisée en ce que la ligne délimitant le contour de l'un au moins des éléments (2) de formation des copeaux est formée par trois courbes concaves.

6. Plaquette de coupe selon la revendication 1, caractérisée en ce que les lignes délimitant le contour des éléments (2) de formation des copeaux s'incurvent pour le passage d'une direction principale à l'autre.

7. Plaquette de coupe selon la revendication 1, caractérisée en ce que les éléments (2) de formation des copeaux comportent, à leur extrémité supérieure, une surface plane (3, 7).

8. Plaquette de coupe selon la revendication 7, caractérisée en ce que les surfaces planes (3, 7) de tous les éléments (2) de formation des copeaux d'une même surface de contact (4) se trouvent dans un même plan.

9. Plaquette de coupe selon la revendication 8, caractérisée en ce que la surface de contact (4) présente la forme d'une dépression, et en ce que le plan déterminé par les surfaces supérieures (3, 7) des éléments (2) de formation des copeaux n'est pas plus haut que le plan déterminé par les bords de coupe (1).

10. Plaquette de coupe selon la revendication 1, caractérisée en ce que les éléments (2) de formation des copeaux sont arrondis à leur extrémité supérieure.

11. Plaquette de coupe selon l'une des revendications 1 à 8, caractérisée en ce que les éléments (2) de formation des copeaux sont placés dans des parties en retrait (5) situées au bord de la surface de contact (4).

12. Plaquette de coupe selon la revendication 11, caractérisée en ce que les parties en retrait (5) sont concaves ou comportent des gradins.

0 084 612

FIG.1

FIG. 2b

FIG. 2a

FIG. 2d

FIG. 2c

1

# FIG. 3

# FIG.4a    FIG.4b    FIG.4c

# FIG.5

2

# FIG.6

VII ↓     VII ↓

2

# FIG.7

1     4     1

9